# EUROPEAN PATENT APPLICATION

(11) **EP 2 610 875 A1**
(43) Date of publication of application: **03.07.2013**
(21) Application number: 11196146.2
(22) Date of filing: 30.12.2011
(51) Int. Cl.: G21C 3/322, G21C 3/324, G21C 1/02

(54) **A wrapper tube for a fuel subassembly of a nuclear reactor core and method for protecting fuel against overheating in case of coolant boiling**

(71) Applicant: Paul Scherrer Institut, 5232 Villigen PSI (CH)
(72) Inventor: Mikityuk, Konstantin, 5200 Brugg (CH); Chenu, Aurelia, 07100 Annonay (FR); Sun, Kaichao, 5200 Brugg (CH)
(74) Representative: Fischer, Michael

(57) **Abstract**

The present invention discloses an innovative design of the sodium-cooled fast reactor subassembly wrapper tube (Figure 1(b)) and a method for protecting the sodium-cooled fast reactor core against overheating and melting in case of the accidents accompanied by a sodium boiling. More generally, the invention is considered to be valuable in any field of technology where a heat generating fuel, heater or the like need to be cooled sufficiently to prevent the resources involved from damage caused by overheating and/or melting.

The innovation of the wrapper tube design compared to the traditional wrapper tube design of a sodium-cooled fast reactor fuel subassembly (Figure 1(a)) consists in an introduction of openings (5). The openings are made in all faces of the wrapper tubes of all fuel subassemblies at the same axial location. The goal of the openings (5) is to provide the sodium flow bypath between the neighbouring subassemblies, in the case when the sodium vapour obstructs or fully blocks the liquid sodium flow at the top of the fuel subassembly (i.e. above the axial level of the openings). Due to this bypath, the sodium flow rate at the inlet of the subassembly, where the boiling occurs, does not significantly drop (Figure 2(b)). As a result, the sodium vapour does not propagate downwards to the core centre, where the void reactivity coefficient is positive, but rather in radial direction from one channel to another, being always kept in the region of low or even negative void reactivity coefficient. Moreover, the availability of the sodium flow rate through the subassembly, where boiling occurs, is beneficial for preventing the cladding dryout, because a part of sodium will flow through the boiling region in the form of a liquid film on the surface of the claddings.

## Description

The invention relates to a wrapper tube for a fuel subassembly of a nuclear reactor core, preferably used in a sodium-cooled fast reactor. Further, the present invention relates to a method for protecting fuel against overheating and melting in case of an accidental coolant boiling in a nuclear reactor, such as a sodium-cooled fast reactor. Furthermore, the present invention relates to a reactor core assembled from a number of fuel subassemblies comprising in the wrapper tubes.

The present invention is aimed at improving the response of a nuclear reactor core to the accidental situations with onset of the coolant boiling, such as sodium boiling, in the fuel rod bundle. More generally, the invention is considered to be valuable in any field of technology where a heat generating fuel, heater or the like need to be cooled sufficiently to prevent the resources involved from damage caused by overheating and/or melting due to a boiling of a coolant.

Considering a reference example, the sodium-cooled fast reactor is an innovative nuclear reactor system which - due to the fast neutron spectrum - has a potential to operate with only natural uranium as a feed fuel and to have only products of fission as a waste. Provided that the corresponding fuel cycle is developed, the already available resources of the natural uranium can make such a reactor a sustainable and safe source of energy for centuries, producing a waste in a compact and controllable form.

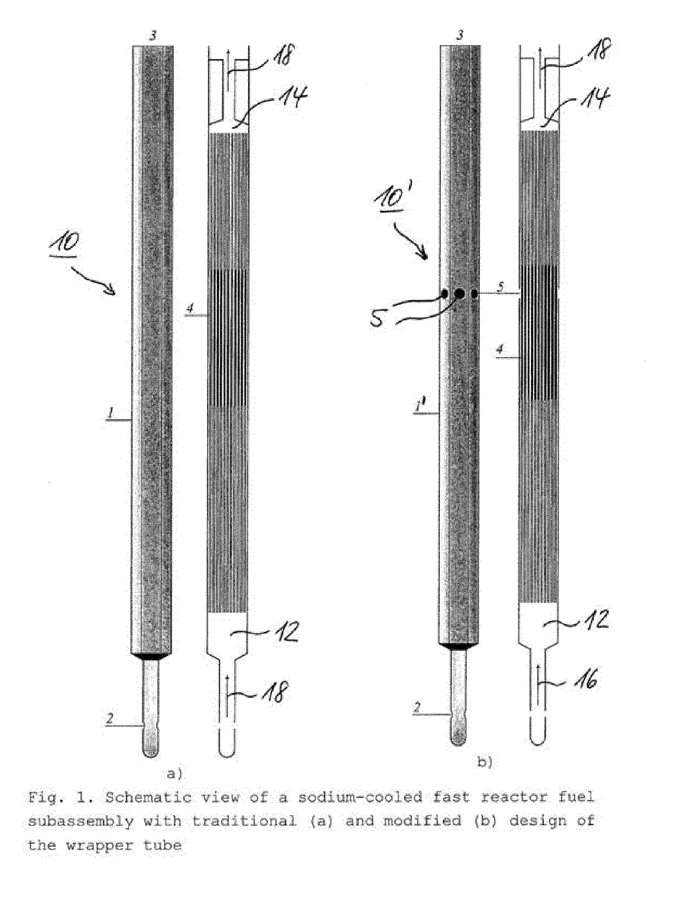

The core of the sodium-cooled fast reactor is a device where the nuclear fission and heat generation occur. The core - depending on the reactor power - can be assembled from several hundreds of fuel subassemblies oriented vertically. A typical fuel subassembly 10 as shown in Figure 1(a) of a not shown sodium-cooled fast reactor typically comprises a bundle of a few hundreds of fuel rods 4 arranged in a triangular (hexagonal) lattice and enclosed in a wrapper tube 1 of a hexagonal cross-sectional area with openings 2 and 3 at the bottom and the top of the fuel subassembly 10 to allow sodium flowing according to arrows 16, 18 in and out, respectively. Every fuel rod 4 in the bundle is a column of the fuel pellets enclosed in a hermetical stainless steel tube (cladding). To accommodate gases, released from the fuel during reactor operation, empty spaces are foreseen inside the cladding tube, such as upper and lower fission gas plenums 12 and 14. The subassembly includes also the upper and lower reflectors, not shown in Figure 1.

Due to the design of the wrapper tube, every subassembly of a typical sodium-cooled fast reactor is isolated from each other and has its own sodium flow rate. The cold sodium from the reactor lower plenum enters the subassembly from the bottom, heats up inside and flows out from the subassembly top into the reactor upper plenum. In normal operation the sodium always remains liquid.

The liquid sodium was selected as a cooling medium for the fast nuclear reactors because of its neutronic characteristics (favourable for the fast neutron energy spectrum) as well as due to its thermal-hydraulic characteristics (favourable for efficient removal of heat). However, in accidental cases (e.g. in case of a failure of the pumps combined with a failure of the protection system) there is a probability that sodium at the top of the fuel bundle reaches its saturation point and starts to boil. The response of the sodium-cooled fast reactor to the sodium boiling is one of the most serious challenges to be addressed while designing the core and demonstrating the reactor safety. The key phenomena challenging the integrity of the fuel rods (and, therefore, prevention of the radioactivity release in the coolant) in case of sodium boiling are:
1) reactor power evolution caused by the feedback between sodium density and the neutron multiplication factor (reactivity); and
2) deterioration of the heat transfer from fuel rods to sodium due to reduction of the sodium flow rate, followed, in a worst case, by dryout of the fuel rod claddings.

The reactivity evolution (and, therefore, the power evolution) caused by the sodium density change is determined by a spatial distribution of the void reactivity coefficient. The void reactivity coefficient in the given core region is the change of the reactivity caused by removal of one kilogram of the sodium from this region. This coefficient in a typical sodium-cooled fast reactor core is strongly positive at the core centre and less positive or even negative at the core periphery.

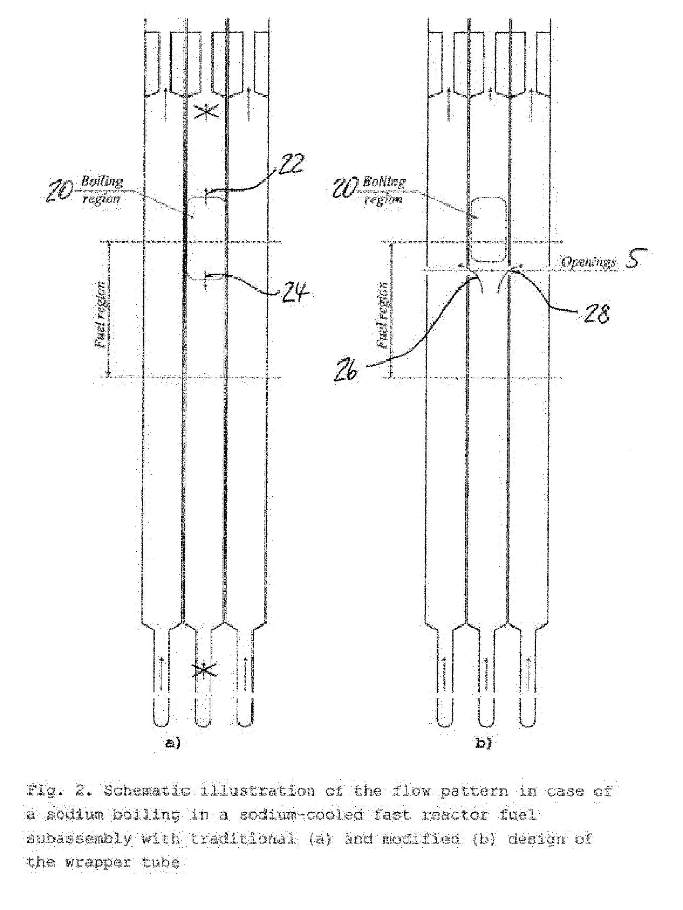

The sodium boiling pattern in a typical sodium-cooled fast reactor core is characterised by a fast formation of large vapour bubbles in the top part of the fuel subassembly (where the sodium is the hottest and where the void reactivity coefficient is close to zero or even negative). These bubbles are rapidly expanding radially and, as a result, may block the flow area of the channel. This blockage leads to an abrupt stop of the coolant flow at the subassembly inlet. As a result, the stagnant sodium inside the fuel subassembly continues to boil off and the vapour propagates down towards the core centre, where the void reactivity coefficient is strongly positive, leading, therefore, to reactivity and power escalation. This process is schematically illustrated in Figure 2(a). The quick power escalation can lead to dryout of the fuel rod claddings and finally to the cladding and fuel melting and relocation with subsequent release of radioactivity in the coolant.

It is, therefore, an objective of the present invention to provide a wrapper tube for a heat-generating fuel pin bundle, preferably for use in a sodium-cooled fast reactor fuel subassembly described above. The invention aims at reducing the impact of the coolant boiling occurring in emergency situations on the core power evolution and on the fuel cooling ability.

This objective is achieved according to the present invention by design of a wrapper tube for a heat-generating fuel pin bundle, preferably used in a sodium-cooled fast reactor, comprising:
a) a wrapper tube having a cross-sectional area, preferably a hexagonal cross-sectional area;
b) a number of fuel rods (4) arranged in a regular lattice, preferably a triangular or a hexagonal lattice; a space between the fuel rods allowing a flow path for a coolant in order to remove heat generated in the fuel;
c) a number of openings in the wrapper tube being provided as a coolant flow bypass between neighbouring subassemblies in case of a partial or total blockage of the internal flow path by a coolant vapour in one or several subassemblies.

This wrapper tube design, therefore, enables for a significant improvement in the operation safety of fuel rod comprising heat generating fuels. The goal of the openings is to provide the coolant flow bypath between neighbouring subassemblies, in the case when the coolant vapour obstructs or fully blocks the liquid coolant flow at the top of the fuel subassembly (i.e. above the axial level of the openings). Due to this bypath, the coolant flow rate at the inlet of the subassemblies, in which the boiling occurs, does not significantly drop. As a result, the coolant vapour does not propagate downwards (as seen in the flow direction of the coolant) to the core centre, where the void reactivity coefficient is positive, but rather in radial direction from one channel to another, being always kept in the region of low or even negative void reactivity coefficient.

The high power density required for the economic performance of the fast reactor core makes it advantageous when the fuel rods are arranged in a compact triangular (hexagonal) lattice and, therefore, the wrapper tube has a hexagonal cross-sectional area. This geometry allows forming the core from the fuel subassemblies arranged in a honeycomb pattern offering six neighbours and herewith six neighbouring bypass channels for the coolant in case of a cooling problem due to "blocking" of the flow path by the coolant vapour in one or several subassemblies.

In order to enable an easy alignment of the openings when assembling the subassemblies to the core, a preferred embodiment of the present invention may provide a solution where the openings are disposed along a circumferential ring; all openings belonging to one circumferential ring being disposed substantially at the same longitudinal height.

In a further preferred embodiment with the aim to prevent the coolant vapour propagating downwards (as seen in the flow direction of the coolant) to the core centre, where the void reactivity coefficient is positive, the longitudinal height of the opening may correspond to the upper half of the fuel region as seen in the flow direction of the coolant.

It is further advantageously when the hydraulic diameter of the six openings (one per face of the wrapper tube) accumulates to less than 50% of the total perimeter of the wrapper tube.

With respect to the method of protecting a nuclear reactor core against overheating and melting in case of an accidental coolant boiling, it consists, according to the present invention, in establishing the flow connections between the neighbouring subassemblies implemented in the form of the above-described openings in the subassembly wrapper tubes, which allows achieving the above-mentioned objective.

With respect to the reactor core, the above-mentioned objective is achieved according to the present invention by a localizing the vapour region in the upper part of the reactor core due to liquid coolant flow in radial direction through the openings in the subassembly wrapper tubes as described above.

Preferred embodiments of the present invention are hereinafter explained with reference to the attach drawings which depict in:
Figure 1 a schematic view of a sodium-cooled fast reactor fuel subassembly with a wrapper tube according to the prior art (a) and the modified design of the wrapper tube (b); and
Figure 2 a schematic illustration of the flow pattern in case of a sodium boiling in a sodium-cooled fast reactor fuel subassembly with traditional (a) and modified (b) design of the wrapper tube. The figure shows not all subassemblies of the core, but only three neighbouring subassemblies in the case when the coolant boiling starts only in one subassembly.

The innovation of the design of a modified wrapper tube subassembly 10' compared to the traditional wrapper tube subassembly 10 of a sodium-cooled fast reactor fuel subassembly consists in an introduction of additional openings 5 in all faces of a modified wrapper tube 1'. Preferably, the openings 5 are made at the same axial position in the modified wrapper tubes 1ʹ of all fuel subassemblies 10' in the core.

The axial location of the openings 5 corresponds to the upper half of the fuel region 6 (see Figure 1(b)). The exact position, shape and dimension of the openings have to be determined, of course, for a specific core design by experimental investigation and numerical modelling.

As shown in Figure 2(a), in emergency situations the sodium boiling starts at the top of the fuel column, where the sodium is the hottest and where the void reactivity coefficient is close to zero or even negative, and then propagates in the direction of arrows 22 and 24 (see a boiling region 20 in Figure 2(a)). The boiling region propagation towards the core centre, i.e. in the direction of arrow 24 in Figure 2(a), is not desirable, because the core centre is the region of highly positive void reactivity coefficient. The bubbles rapidly expanding radially block the flow area of the channel, leading to an abrupt stop of the coolant flow 33 at the subassembly inlet.

The goal of the openings 5 in the modified wrapper tube 1ʹ is to provide a liquid sodium flow bypath (see arrows 26 and 28) between not further shown neighbouring subassemblies 10', in the case when the sodium vapour obstructs or fully blocks the liquid sodium flow at the top of the fuel subassembly (i.e. above the axial level of the openings). Due to this bypath, the sodium flow rate 30' at the inlet of the modified fuel subassembly 10', where the boiling occurs, does not significantly drop (see Figure 2(b)). As a result, the sodium vapour does not propagate downwards (as along arrow 24 in Figure 2(a)) to the core centre, where the void reactivity coefficient is positive, but rather in radial direction from one channel to another, being always kept in the region of low or even negative void reactivity coefficient. Moreover, the availability of the sodium flow rate 30' through the modified fuel subassembly 10', where boiling occurs, is beneficial for preventing the cladding dryout, because a part of sodium will flow through the boiling region in the form of a liquid film on the surface of the claddings.

Therefore, the invention provides a significant improvement of the sodium-cooled fast reactor core behaviour under sodium boiling conditions through keeping the vapour generation region 20 in the upper part of the core, where the void reactivity effect is close to zero or even negative. The cross-flows between neighbouring fuel assemblies 10' in normal operation have been identified to be negligible.

## Claims

1. A fuel subassembly (10') of a nuclear reactor core, preferably used in a sodium-cooled fast reactor, comprising:
a) a wrapper tube having a hexagonal cross-sectional area;
b) a number of fuel rods (4) arranged in a triangular (hexagonal) lattice; a space between the fuel rods allowing a flow path for a coolant in order to remove heat generated in the fuel;
c) a number of openings in the wrapper tube being provided as a coolant flow bypass between neighbouring subassemblies in case of a partial or total blockage of the internal flow path by a coolant vapour in one or several subassemblies.

2. The fuel subassembly (10') according to claim 1,
**characterized in that**
the wrapper tube (1ʹ) has a hexagonal cross-sectional area.

3. The fuel subassembly (10') according to any of the preceding claims, **characterized in that**
the openings (5) are disposed along a circumferential path; all openings (5) being disposed substantially at the same longitudinal height or axial position.

4. The fuel subassembly (10') according to claim 3,
**characterized in that**
the longitudinal height of the openings (5) corresponds to the upper half of the fuel region (6) as seen in the flow direction of the coolant.

5. The fuel subassembly (10') according to any of the preceding claims, **characterized in that**
the hydraulic diameter of the six openings 5 (one per face of the wrapper tube) accumulates to less than 50% of the total perimeter of the wrapper tube.

6. A method for protecting a sodium-cooled fast reactor core against overheating and melting in case of an accident accompanied by sodium boiling, based on the use of the fuel subassembly (10') according to any of the preceding claims 1 to 5.
